# EUROPEAN PATENT SPECIFICATION

(11) **EP 0 403 443 B1**
(45) Date of publication and mention of the grant of the patent: **26.04.1995**
(21) Application number: 90830221.9
(22) Date of filing: 18.05.1990
(51) Int. Cl.: B29D 30/52

(54) **Improved tread assembly for retreading motor vehicle tires and mold for making the same**
Laufflächenaufbau zum Runderneuern von Fahrzeugreifen und Form zu dessen Herstellung
Bande de roulement pour le rechapage de pneus pour véhicules et moule pour sa fabrication

(30) Priority: 14.06.1989 IT 2086989
(43) Date of publication of application: 19.12.1990
(73) Proprietor: MARANGONI RTS S.p.A., I-03013 Ferentino (Frosinone) (IT)
(72) Inventor: Gastaldello, Giancarlo, I-37126 Verona (IT)
(74) Representative: Cicogna, Franco

(56) References cited:
- EP-A- 0 080 596
- EP-A- 0 121 835
- EP-A- 0 176 945
- DE-A- 1 934 767
- DE-A- 3 538 126
- FR-A- 2 256 012
- GB-A- 799 261
- US-A- 4 561 626

## Description

### BACKGROUND OF THE INVENTION

The present invention relates to an improved tread assembly, for retreading motor vehicle tires, and a mold for making this assembly.

As is known, for retreading motor vehicle tires, a new tread assembly is applied to the tire carcass so as to cause said new tread assembly to perfectly adhere to the outer surface of the carcass.

Conventionally used treads have a flat configuration, both on the bottom face thereof, provided for contacting the carcass, and on the outer face thereof which comprises the tire grooves and blocks.

As such a flat tread is applied on a tire carcass, the starting tread profile is deformed since the bottom face of the tread must be permanently deformed in order to provide the proper binding of the tread to the carcass.

In particular, during the application of a flat tread, the tread grooves tend to be enlarged thereby the tread will loose its designed characteristics which are necessary for providing a proper empty space/land ratio which, as is known, is necessary for rejecting pebbles and providing a suitable "acqua-planing" performance.

Another known method for retreading tires is that of providing flat treads which are provided, on their longitudinal edges, with a side rim having a radiused portion adapted to properly fit the carcass surface.

However, even during the application of this type of tread, there are generated permanent deformations as in the first disclosed case; moreover, at the shoulders of the carcass ,there is necessary to provide an increased amount of material, usually rubber, and, accordingly, a greater heating of the tire will occur during the running on a road.

Thus, a tire retreaded by the above disclosed flat treads will have poor characteristics with respect to a new tire.

The document EP-A-0 176 945 discloses a mold for making a tread assembly having substantially the features of the preamble of the main claim.

### SUMMARY OF THE INVENTION

Accordingly, the main object of the present invention is to overcome the above mentioned drawbacks by providing a new type of mold for making an improved tread which can be applied to a tire carcass without generating any permanent deformations, thereby perfectly reproducing the characteristics of a new tire.

Another object of the present invention is to provide such mold providing a tread which can be applied in a very simple and quick way to the tire carcass without any problems relating to the proper binding of the tread to the carcass itself.

Another object of the present invention is to provide such a tread mold which is very reliable and safe in operation.

According to the invention, the above mentioned objects, as well as yet other objects, which will become more apparent hereinafter, are achieved by mold for making a tread assembly, for retreading vehicle tires, having the features of the characterizing portion of the main claim.

### BRIEF DESCRIPTION OF THE DRAWINGS

Further characteristics and advantages of the invention will become more apparent from the following description of a preferred, though not exclusive, embodiment of an improved tread assembly, for retreading vehicle tires, as well as of a mold to be used for making said tread assembly, which are illustrated with reference to the accompanying drawings, where:
Figure 1 schematically shows a flat tread of conventional type;
Figure 2 shows a flat tread provided with a side rim portion;
Figure 3 shows the tread assembly according to the present invention;
Figure 4 schematically shows a tire to which there is applied a flat tread of conventional type;
Figure 5 schematically shows a tire to which there is applied a flat tread with side rim, of conventional type;
Figure 6 schematically shows a tire to which there is applied a tread assembly according to the present invention; and
Figure 7 is a cross-sectional view illustrating a mold according to the invention which can be used for making the subject tread assembly.

### DESCRIPTION OF THE PREFERRED EMBODIMENT

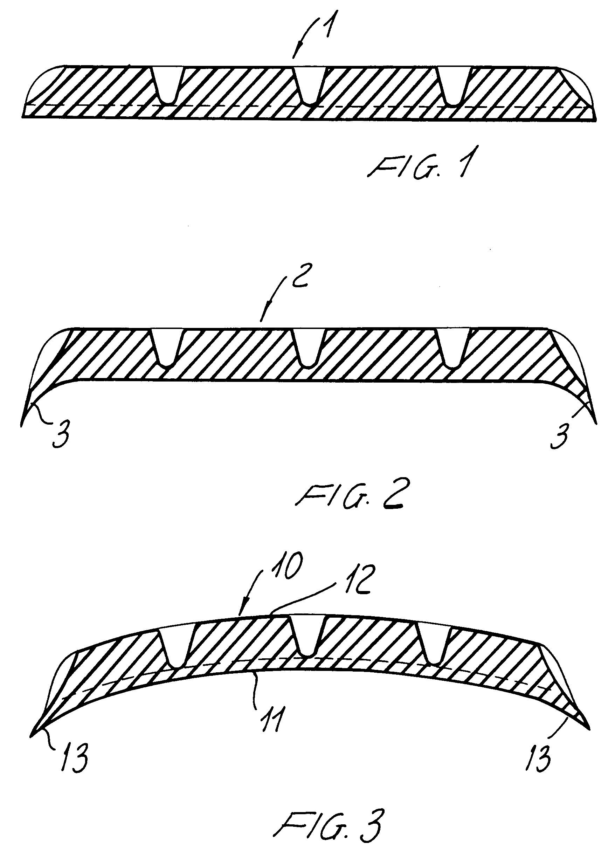

With reference to the figures of the accompanying drawings and, more specifically, to figures 1, 2, 4 and 5 there are herein illustrated respectively a flat tread, of conventional type, indicated at the reference number 1, and a flat tread provided with a side rim, of conventional type, indicated at the reference number 2, with the edges being indicated at the reference number 3.

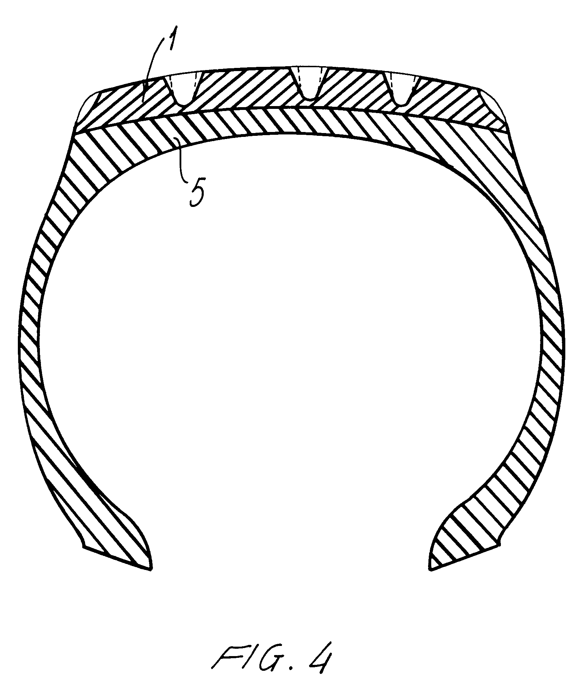

As stated, as this conventional flat treads are applied to a tire carcass 5, they generate deformations: in fact, as shown in figure 4, the flat tread, in order to fit the balance profile of the tire, must be applied with a permanent deformation, with the consequent disclosed drawbacks.

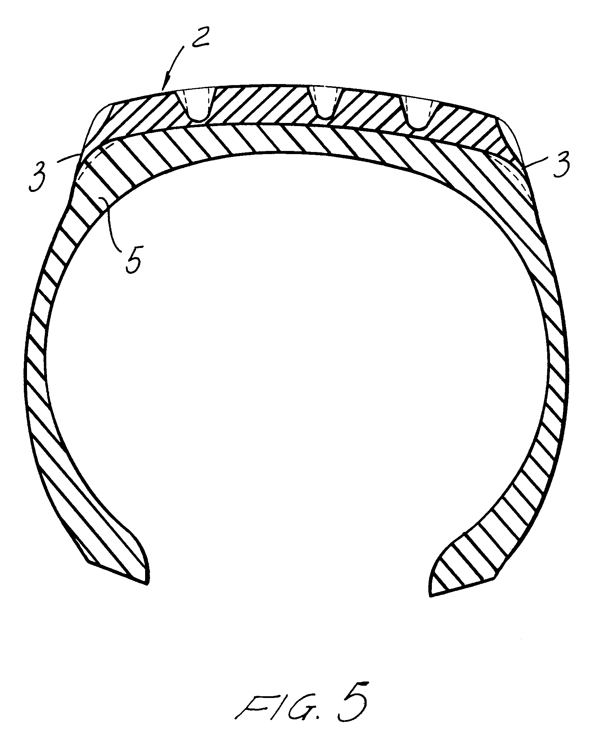

Likewise, in figure 5 there is shown a premolded flat tread 2, having radiused rims 3 at the bottom of the shoulders which, in order to fit the balance profile of the tire, must be applied with a permanent deformation and a larger amount of rubber material on the shoulders of the carcass, with the mentioned drawbacks.

The main feature of the present invention is that of providing an improved tread assembly which comprises a shaped tread body 10, shown in figure 3, having a lower face, indicated at 11, of concave shape, and a profile which is adapted to mate with the corresponding profile of the tire carcass to which the tread is to be applied.

The tread assembly 10, moreover, is provided with a convex outer face 12 which has the same balance profile as the tire and is provided with side edges or rims 13, having a suitable tapered arrangement mating the balance profile of the tire shoulders, up to the top portion of the sidewalls, thereby providing a substantially continuous tire assembly.

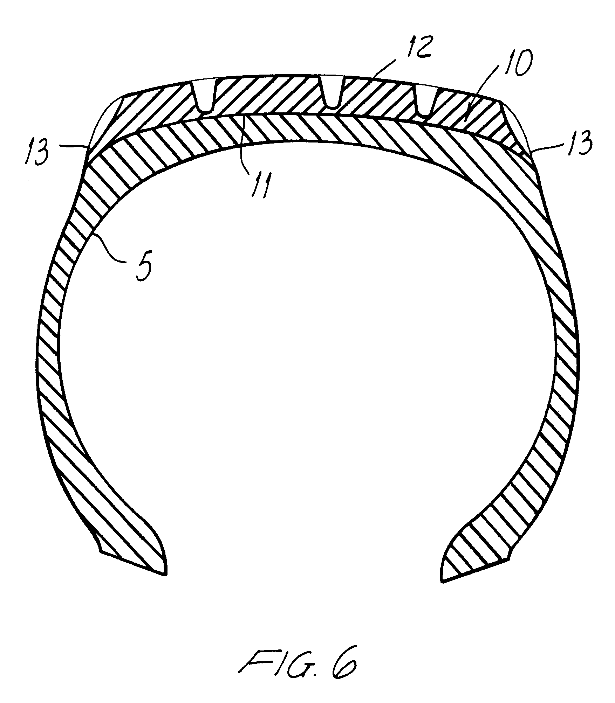

As is clearly shown in figure 6, the subject tread assembly follows the balance profile of the tire and mates its contour, thereby providing an integral assembly, devoid of any deformations and/or stress and which will have all of the performance characteristics of a new tire,

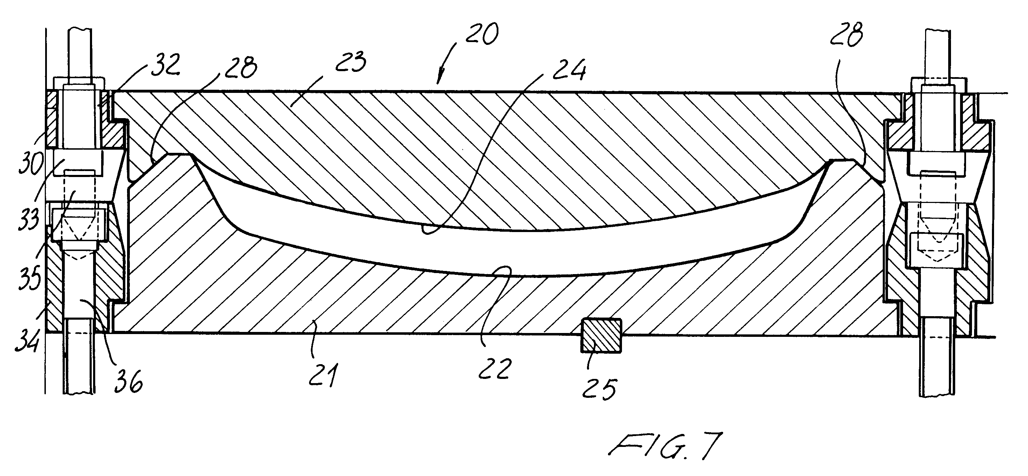

In order to industrially make the tread assembly 10 there is used a tread mold, indicated overally at the reference number 20 in figure 7, which is provided with a bottom mold portion 21 having an impression 22 which substantially corresponds to the convex surface, which is provided of set grooves.

To the bottom mold portion 21 there is coupled a top mold portion 23 which has a shaped surface 24 adapted to make the concave face of the tread 10, having a profile mating with the lower surface of the carcass.

The molds are advantageously made in sectors: in particular, the bottom mold 21 is formed by several sectors or segments which are coupled to the bottom plate the press and aligned by a centering tab indicated at 25.

The sectors or segments which form the top mold portion, coupled to the top plate of the press, are provided with a doubly beveled centering portion, indicated at 28, which mates, at the longitudinal edges thereof, with a corresponding pattern of the bottom mold portion thereby providing a perfect symmetry of the molded profile, since the closure reference of the mold is just formed by the centering doubly beveled surfaces.

The mold affixing system provides moreover that, if the press bed or plates are deformed under the action of steam or other fluid, then the bottom mold portion/top mold portion assembly is held in an autocentered condition, possible deformations being taken up by supporting blocks of the segments of the top mold, indicated at the reference number 30, which are provided with holes or slots 32 having a larger size than that of the coupling pins thereby easily correcting possible offsets.

Likewise, there are provided bottom blocks 34 for affixing the bottom mold portion, as well as being further provided a centering pin 35 interconnected between the pins 36 and 33 which respectively affix the bottom mold portion and top mold portion.

Thus, the mold will be precisely centered to provide tread assemblies having a precise desired shape.

From the above disclosure it should be apparent that the invention fully achieves the intended objects.

In particular, the fact is to be pointed out that an improved tread assembly has been provided, in an already shaped condition, which has precisely the same shape as the surface of the carcass to which it must be applied, thereby providing a tread product which is devoid of any permanent deformations as it is assembled on a tire carcass and which, accordingly, affords the possibily of obtaining a retreaded tire having the same performance characteristics as a new tire.

In practicing the invention, the used materials, as well as the contingent shapes and size can be any according to requirements.

## Claims

1. A mold (20) for making a tread assembly (1), said mold comprising a bottom mold portion (21) and a top mold portion (23) which can be coupled to one another, said bottom mold portion comprising an impression (22) corresponding to the convex surface (12) of the tread (1) to be made and said top mold portion (23) having a shaped surface adapted to make the concave face (11) of the tread (1) characterized in that said shaped surface has a profile conjugated with the profile of the tire carcass (5), said impression (22) corresponding substantially to the balance profile of the tread of the new tire, said bottom mold portion (21) and top mold portion (23) being both made by segments, the segments forming said top mold portion being provided with a doubly beveled centering portion (28) coupled, at the longitudinal edges, with a corresponding portion of the bottom mold portion (21) to provide a precise symmetry of the molded profile.

2. A mold according to Claim 1, characterized in that said mold (20) comprises top fixing blocks (30) including fixing pins for fixing said top mold portion (23), said top fixing blocks (30) having a slot (32) with a size greater than that of said fixing pins of said top blocks in order to take up possible offsets caused by thermal deformations.

3. A mold according to Claim 1, characterized in that said mold (20) comprises bottom fixing blocks (34) for fixing said bottom mold portion (21) there being moreover provided centering pins (35) operating between said fixing pins (36,33) of said top blocks (30) and corresponding fixing pins of said bottom blocks (34).

## Patentansprüche

1. Eine Form (20) zum Herstellen einer Laufflächenmontage (1), diese Form umfassend ein Unterteil (21) der Form und ein Oberteil (23) der Form, die miteinander verbunden werden können, dabei besitzt dieses Unterteil der Form eine Vertiefung (22), die der konvexen Oberfläche (12) der herzustellenden Lauffläche (1) entspricht, und dieses Oberteil (23) der Form eine geformte Oberfläche, die angepaßt ist, die konkave Fläche (11) der Lauffläche (1) zu ergeben, dadurch gekennzeichnet, daß diese geformte Oberfläche einen Umriß besitzt, der an den Umriß der Reifenkarkasse (5) angepaßt ist, wobei diese Vertiefung (22) im wesentlichen dem Ausgleichsprofil der Lauffläche des neuen Reifens entspricht, dabei sind dieses Oberteil (21) der Form und dieses Unterteil (23) der Form beide aus Segmenten hergestellt, wobei die Segmente, die dieses Oberteil der Form bilden, mit einem doppelt abgeschrägten, zentrierenden Teil (28) ausgestattet sind, das an den längsseitigen Kanten mit einem entsprechenden Teil des Unterteils (21) der Form bereitgestellt ist, um eine genaue Symmetrie des geformten Profils bereitzustellen.

2. Eine Form gemäß Anspruch 1, dadurch gekennzeichnet, daß diese Form (20) obere Befestigungsblöcke (30) mit Befestigungsstiften zum Befestigen dieses Oberteils (23) der Form umfaßt, dabei besitzen diese Befestigungsblöcke (30) einen Spalt (32), der größer als diese Befestigungsstifte dieser oberen Blöcke ist, um mögliche, durch thermische Deformationen verursachte Verschiebungen aufzunehmen.

3. Eine Form gemäß Anspruch 1, dadurch gekennzeichnet, daß diese Form (20) untere Befestigungsblöcke (34) zum Befestigen dieses Unterteils (21) der Form umfaßt, dabei sind weiterhin Zentrierstifte (35) bereitgestellt, die zwischen diesen Befestigungsstiften (36, 33) dieser oberen Blöcke (30) wirken, und entsprechende Befestigungsstifte dieser unteren Blöcke (34).

## Revendications

1. Un moule (20) pour fabriquer un assemblage de chape (1), ledit moule comprenant une partie de moule inférieure (21) et une partie de moule supérieure (23) qui peuvent être couplées l'une à l'autre, ladite partie de moule inférieure comprenant une impression (22) correspondant à la surface convexe (12) de la chape (1) qui doit être fabriquée et ladite partie de moule supérieure (23) ayant une surface profilée adaptée à produire la face concave (11) de la chape (1), caractérisée en ce que ladite surface profilée a un profil complémentaire au profil de la carcasse du pneu (5), ladite impression (22) correspondant substantiellement au profil compensé de la chape du nouveau pneu, lesdites partie de moule inférieure (21) et partie de moule supérieure (23) étant toutes deux faites de segments, les segments formant ladite partie supérieure de moule étant dotés d'une partie de centrage (28) à double coupe oblique couplée le long de ses bords longitudinaux à une partie correspondante de la partie de moule inférieure (21), afin de donner une précise symétrie du profil moulé.

2. Un moule selon la revendication 1, caractérisé en ce que ledit moule (20) comprend deux blocs supérieurs de fixation (30) incluant des goupilles de fixation pour fixer ladite partie supérieure (23) du moule, lesdits blocs supérieurs de fixation (30) ayant une fente (32) de dimension supérieure à celle des goupilles de fixation desdits blocs supérieurs, afin de compenser d'éventuels décalages causés par des déformations thermiques.

3. Un moule selon la revendication 1, caractérisé en ce que ledit moule (20) comporte des blocs de fixation (34) de fond pour fixer ladite partie inférieure (21) du moule, y étant en plus prévues des goupilles de centrage (35) opérant entre lesdites goupilles de fixation (36, 33) desdits blocs (30) supérieurs et de correspondantes goupilles de fixation desdits blocs inférieurs (34).
